(19) Europäisches Patentamt
European Patent Office
Office européen des brevets

(11) Veröffentlichungsnummer : **0 005 502**
**B1**

(12) **EUROPÄISCHE PATENTSCHRIFT**

(45) Veröffentlichungstag der Patentschrift : **29.07.81**

(51) Int. Cl.$^3$ : **C 07 F 9/34**

(21) Anmeldenummer : **79101403.8**

(22) Anmeldetag : **08.05.79**

# (54) Verfahren zur Herstellung von Halogenmethylphosphinsäurehalogeniden.

(30) Priorität : **24.05.78 DE 2822655**

(43) Veröffentlichungstag der Anmeldung : **28.11.79 (Patentblatt 79/24)**

(45) Bekanntmachung des Hinweises auf die Patenterteilung : **29.07.81 Patentblatt 81/30**

(84) Benannte Vertragsstaaten : **BE DE FR GB IT NL**

(56) Entgegenhaltungen :
**US - A - 3 360 556**
**CHEMICAL ABSTRACTS, Vol. 49, Nr. 2, 25. Januar 1955, Seite 843 Columbus, Ohio, U.S.A.**
**M. I. KABACHNIK et al. : "Reaction of aldehydes with chlorophosphines".**
**JOURNAL OF THE AMERICAN CHEMICAL SOCIETY, April 20, 1961, Vol. 83, Seiten 1 811-3.**

(73) Patentinhaber : **HOECHST AKTIENGESELLSCHAFT**
**Postfach 80 03 20**
**D-6230 Frankfurt/Main 80 (DE)**

(72) Erfinder : **Neumaier, Hubert, Dr.**
**Am grünen Weg 10**
**D-5030 Hürth (DE)**

**EP 0 005 502 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Verfahren zur Herstellung von Halogenmethylphosphinsäurehalogeniden

Es ist bekannt, daß Organyldichlorphosphane mit Formaldehyd nach der allgemeinen Gleichung

$$RPCl_2 + CH_2O \rightarrow ClCH_2(R)P(O)Cl$$

zu Chlormethylorganylphosphinsäurechloriden reagieren. So erhielten M.I. KABACHNIK und E.S. SHEPELEVA, Otdel. Khim. Nauk *1953*, 862-7, beim Erhitzen von Ethyldichlorphosphan bzw. Phenyldichlorphosphan mit Paraformaldehyd im Einschlußrohr die entsprechenden Chlormethylphosphinsäurechloride mit Ausbeuten von 36 % bzw. 47 %. Die Nachteile dieser Verfahrensweise liegen darin, daß aufgrund der Reaktion im Einschlußrohr unter Druck nur sehr kleine Mengen umgesetzt werden können, und daß die Ausbeuten wirtschaftlich uninteressant sind. L.D.C. GROENWEGHE und J.H. PAYNE, J. A.C.S. *83*, 1811-13 (1961), beschreiben die Umsetzung von Methyldichlorphosphan mit Paraformaldehyd zu Chlormethyl-methylphosphin-säurechlorid mit einer Ausbeute von 70 %, indem man Paraformaldehyd in kleinen Portionen zu siedendem Methyldichlorphosphan gibt. Der Nachteil liegt hier, abgesehen von der Bildung wesentlicher Mengen Nebenprodukte auf Kosten der Ausbeute, in der schwierigen Reaktionsführung im Hinblick auf eine technische Anwendung, da Paraformaldehyd aufgrund der stark exothermen Reaktion nur in kleinen Portionen in das Reaktionsgemisch eingetragen werden kann, was zu langen Reaktionszeiten führt.

Es wurde nun überraschenderweise gefunden, daß man Halogenmethylphosphinsäurehalogen ide der allgemeinen Formel

$$XCH_2(R)P(O)X \quad (I)$$

worin R eine Alkyl- oder Halogenalkyl-, eine Aralkyl- oder Halogenaralkyl-, eine Aryl- oder Halogenarylgruppe mit bis zu 18 C-Atomen und X ein Halogenatom bedeuten, dadurch in sehr guter Ausbeute herstellen kann, daß man Organyldihalogenphosphane der allgemeinen Formel

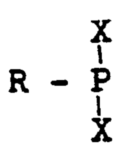

(II)

worin R und X die obige Bedeutung haben, mit Trioxan in Gegenwart von Katalysatoren, die aus einer Lewissäure oder aus einer Protonsäure bestehen, bei Temperaturen zwischen 80 und 250 °C, vorzugsweise zwischen 110 und 170 °C, während 0,25 bis 3 Stunden umsetzt.

Bevorzugt als Rest R sind unsubstituierte Alkylgruppen oder solche, in denen ein oder mehrere Wasserstoffatome durch Halogen substituiert sind mit 1-10, insbesondere 1-4, C-Atomen. Vor allem kommen dabei in Betracht die Methyl- und Ethyl- sowie Halogenmethyl- und Halogenethylgruppen sowie Cycloalkylgruppen mit 5-8 C-Atomen, insbesondere die Cyclohexylgruppe, die gleichfalls Halogen enthalten kann, ferner Aryl- oder Aralkylgruppen mit 6-10 C-Atomen, insbesondere Phenyl- oder Phenylalkylgruppen, wobei gleichfalls ein oder mehrere Wasserstoffatome durch Halogen substituiert sein können.

Als X = Halogen wird Brom und insbesondere Chlor bevorzugt.

Als Lewis-Säuren eignen sich beispielsweise Aluminiumchlorid, Zinntetrachlorid, Borfluorid-Etherat, während als Protonsäuren beispielsweise Phosphorsäure, Schwefelsäure, Bromwasserstoff oder Chlorwasserstoff empfehlenswert sind. Insbesondere die Verwendung der gasförmigen Verbindungen Bromwasserstoff und Chlorwasserstoff ist von Vorteil, weil sie ohne Schwierigkeit durch das Reaktionsgemisch geleitet werden können und bei der Aufarbeitung keine Rückstände bilden.

Die Umsetzung wird bevorzugt in Abwesenheit von Lösemitteln durchgeführt. Gegebenenfalls kann auch in Gegenwart von Lösemitteln gearbeitet werden, insbesondere dann, wenn das verwendete Organyldichlorphosphan im festen Aggregatzustand vorliegt.

Die Reaktion verläuft in Gegenwart von Katalysatoren sehr schnell und ist in üblichen Anlagen — in Abhängigkeit von deren Dimensionen und von der Reaktionstemperatur — in 0,25-3 Stunden beendet. Von besonderem Vorteil ist es, die Umsetzung kontinuierlich durchzuführen, da die schnelle Reaktion im Zusammenhang mit hohem Umsatz und in Abwesenheit von Lösemitteln sehr hohe Raum-Zeit-Ausbeuten zuläßt.

Zur Durchführung der erfindungsgemäßen Reaktion wird Trioxan in einem Organyldihalogenphosphan gelöst und diese Lösung in ein Reaktionsgefäß, in welchem eine Halogenwasserstoffatmosphäre — hervorgerufen durch Durchleiten von Halogenwasserstoff — erzeugt wird, bei der gewünschten Temperatur eindosiert. Es ist von Vorteil, wenn Reaktionsprodukt der vorangegangenen Charge zu Beginn der Reaktion vorgelegt, auf die gewünschte Reaktionstemperatur gebracht und in dieses aufgeheizte Produkt die umzusetzende Reaktionslösung eindosiert wird. Bei kontinuierlicher Reaktionsführung wird Reaktionsprodukt in dem Maße aus der Reaktionsapparatur abgezogen, wie die Ausgangslösung eindosiert wird.

Es ist weiterhin von Vorteil, die Reaktionspartner in stöchiometrischen Mengen, d.h. 3 Mole des Organyldihalogenphosphans pro Mol Trioxan bzw. 1 Mol Organyldihalogenphosphan pro Mol Formeleinheit [-$CH_2O$-] einzusetzen. Ein Überschuß des einen oder des anderen Reaktionspartners ist zwar möglich, doch wird beispielsweise durch einen Überschuß an Trioxan die Ausbeute gemindert aufgrund der Bildung höhersiedender Nebenprodukte, während beispielsweise durch

einen Überschuß an Organyldihalogenphosphan der nicht umsetzbare Anteil am Rückfluß siedet, was ein Absinken der Reaktionstemperatur zur Folge hat, wodurch wiederum die Reaktionsgeschwindigkeit herabgesetzt und der Anteil nichtumgesetzten Dihalogenphosphans bei weiterem Temperaturrückgang erhöht wird.

Da die Umsetzungen mit guten bis sehr guten Ausbeuten verlaufen, ist es in vielen Fällen, in denen die Phosphinsäurehalogenide nur eine Zwischenstufe für weitere Umsetzungen sind, möglich, diese Weiterverarbeitung mit dem Rohprodukt durchzuführen. Andernfalls kann die Reinigung der Phosphinsäurehalogenide z.B. durch Destillation erfolgen.

Die erfindungsgemäß hergestellten Phosphinsäurehalogenide sind als Zwischenprodukte beispielsweise für Pflanzenschutzmittel, Flammschutzmittel und pharmazeutische Produkte von hohem Interesse.

Beispiel 1

Ein Umlaufreaktor, bestehend aus zwei senkrecht stehenden, ummantelten Rohren, die oben und unten miteinander verbunden waren, wurde mit Chlormethyl-methylphosphinsäurechlorid gefüllt und auf 150 °C aufgeheizt. In den einen Schenkel wurden von unten 10 l/h Chlorwasserstoffgas eingeleitet, wodurch ein Zwangsumlauf entstand. Der Chlorwasserstoff wurde am Kopf des Reaktors über einen Rückflußkühler abgeleitet.

Von einer Lösung, hergestellt aus Methyldichlorphosphan und Trioxan im Gewichtsverhältnis 3,9 : 1 bzw. im Molverhältnis 3 : 1 wurden kontinuierlich 1,7 kg/h — das entsprach 1 353 g oder 11,56 Mol $CH_3PCl_2$ und 347 g oder 3,85 Mol Trioxan in der Stunde — in den Reaktor unter Konstanthaltung der Temperatur bei 150 °C eindosiert. Über einen Überlauf wurden gleichzeitig kontinuierlich 1,7 kg Reaktionsprodukt in der Stunde entnommen und einer kontinuierlich betriebenen Vakuumdestillation (18,5 mbar) zugeführt. Am Kopf der Vakuumkolonne fielen stündlich 1,54 kg oder 10,47 Mol Chlormethyl-methylphosphinsäurechlorid an, während in einer der Vakuumpumpe vorgeschalteten Kühlfalle (−78 °C) in der Stunde 64,3 g oder 0,55 Mol nichtumgesetztes $CH_3PCl_2$ kondensierten.

Der Umsatz an $CH_3PCL_2$ war demnach 95,25 %, die Ausbeute an Chlormethyl-methylphosphinsäurechlorid betrug 95,1 %.

Beispiel 2

In 131 g oder 1 Mol Ethyldichlorphosphan, $C_2H_5PCl_2$ (EDP), wurden 30 g oder 0,33 Mol Trioxan gelöst. In einem Glaskolben mit Rückflußkühler, Tropftrichter und Einleitungsrohr wurden etwa 30 cm$^3$ der Lösung auf 110 °C erhitzt und gleichzeitig 5 l/h HCl-Gas durchgeleitet, wobei die Temperatur auf 143 °C anstieg. Während der HCl-Strom aufrechterhalten wurde, wurde unter Beibehaltung der Temperatur der Rest der Lösung innerhalb 90 Minuten eingetropft. Nach 30 minütiger Nachreaktion wurde das Reaktionsgemisch bei gutem Vakuum destilliert. Nach einem Vorlauf, der im wesentlichen aus nichtumgesetztem EDP bestand, wurden 94,7 g Chlormethylethylphosphinsäurechlorid erhalten. Bei einem Umsatz von 75,6 % EDP entsprach dies einer Ausbeute von 77,8 %.

Beispiel 3

In 89,5 g oder 0,5 Mol Phenyldichlorphosphan ($C_6H_5PCl_2$) wurden 15 g oder 0,17 Mol Trioxan gelöst und diese Lösung in einen auf 150 °C erhitzten Kolben innerhalb von 2,5 Stunden eingetropft, während gleichzeitig 5 l/h Chlorwasserstoffgas durch das Reaktionsgemisch geleitet wurde. Nach beendeter Reaktion wurde unter Vakuum destilliert. Nach einem Vorlauf von 16 g $C_6H_5PCl_2$ wurden 65 g $C_6H_5(ClCH_2)P(O)Cl$ bei 136 °C und 0,9 mbar erhalten. Das entsprach einer Ausbeute von 75,8 % berechnet auf umgesetztes $C_6H_5PCl_2$.

**Ansprüche**

1. Verfahren zur Herstellung von Halogenmethylphosphinsäurehalogeniden der allgemeinen Formel

$$XCH_2(R)P(O)X$$

worin R eine Alkyl-, Halogenalkyl-, Aralkyl-, Halogenaralkyl-, Aryl- oder Halogenarylgruppe mit jeweils bis zu 18 C-Atomen und X ein Halogenatom bedeuten, *dadurch gekennzeichnet*, daß man Organyldihalogenphosphane der allgemeinen Formel

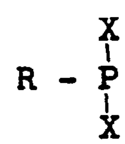

mit Trioxan in Gegenwart einer Lewis- oder Protonsäure als Katalysator bei Temperaturen zwischen 80 und 250 °C während 0,25 bis 3 Stunden umsetzt.

2. Verfahren nach Anspruch 1, *dadurch gekennzeichnet*, daß man als Organyldihalogenphosphane die entsprechenden Chlor- oder Bromphosphane einsetzt.

3. Verfahren nach Anspruch 1 oder 2, *dadurch gekennzeichnet*, daß man als Lewis-Säure Aluminium (III)-chlorid, Zinn (IV)-chlorid oder Borfluorid-Etherat einsetzt.

4. Verfahren nach Anspruch 1 oder 2, *dadurch gekennzeichnet*, daß man als Protonsäure Phosphorsäure, Schwefelsäure, Bromwasserstoff oder Chlorwasserstoff einsetzt.

5. Verfahren nach einem der Ansprüche 1 bis 4, *dadurch gekennzeichnet*, daß man die Umsetzung bei einer Reaktionstemperatur zwischen 110 und 170 °C durchführt.

**Claims**

1. Process for making halogenomethylphosphinic acid halides of the general formula

$$XCH_2(R)P(O)X$$

in which R stands for an alkyl, halogenoalkyl, aralkyl, halogenoaralkyl, aryl or halogenoaryl group, of which each has up to 18 carbon atoms, and X stands for a halogen atom, which comprises: reacting organyldihalogenophosphanes of the general formula

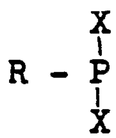

with trioxane in the presence of a Lewis acid or protonic acid as a catalyst, at temperatures between 80 and 250 °C, within 0,25 to 3 hours.

2. Process as claimed in claim 1, wherein the organyldihalogenophosphanes used are selected from the corresponding chloro- or bromophosphanes.

3. Process as claimed in claim 1 or 2, wherein aluminium-III-chloride, tin-IV-chloride or borofluoride etherate is used as the Lewis acid.

4. Process as claimed in claim 1 or 2, wherein phosphoric acid, sulfuric acid, hydrogen bromide or hydrogen chloride is used as the protonic acid.

5. Process as claimed in any of claims 1 to 4, wherein the reaction is effected at a reaction temperature between 110 and 170 °C.

**Revendications**

1. Procédé de préparation d'halogénures d'acides halogénométhylphosphiniques de formule générale suivante

$$XCH_2(R)P(O)X$$

dans laquelle R représente un groupe alkyle, halogénoalkyle, aralkyle, halogénoaralkyle, aryle ou halogénoaryle, chacun de ces groupes ayant jusqu'à 18 atomes de carbone, et X représente un atome d'halogène, caractérisé en ce que l'on fait réagir des organyldihalogénophosphines de formule générale suivante

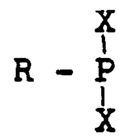

avec du trioxanne en présence d'un acide de Lewis ou d'un acide protonique comme catalyseur à des températures comprises entre 80 et 250 °C et pendant 0,25 à 3 heures.

2. Procédé selon la revendication 1, caractérisé en ce que, comme organyldihalogénophosphines, l'on utilise les chloro- ou bromophosphines correspondantes.

3. Procédé selon la revendication 1 ou 2, caractérisé en ce que, comme acide de Lewis, l'on utilise le chlorure d'aluminium (III), le chlorure d'étain (IV) ou l'éthérate de fluorure de bore.

4. Procédé selon la revendication 1 ou 2, caractérisé en ce que, comme acide protonique, on utilise l'acide phosphorique, l'acide sulfurique, l'acide bromhydrique ou l'acide chlorhydrique.

5. Procédé selon l'une quelconque des revendications 1 à 4, caractérisé en ce que l'on effectue la réaction à une température comprise entre 110 et 170 °C.